# EUROPÄISCHE PATENTANMELDUNG

(11) **EP 2 581 718 A1**
(43) Veröffentlichungstag der Anmeldung: **17.04.2013**
(21) Anmeldenummer: 12184045.8
(22) Anmeldetag: 12.09.2012
(51) Int. Cl.: G01F 23/22

(54) **Drehflügelgrenzschalter und Verfahren zum Betreiben eines Drehflügelgrenzschalters**

(30) Priorität: 14.10.2011 DE 102011084561
(71) Anmelder: ENDRESS + HAUSER WETZER GmbH + Co. KG, 87484 Nesselwang (DE)
(72) Erfinder: Stahl, Marc, 87487 Wiggensbach (DE); Zeller, Robert, 86983 Lechbruck (DE); Schuttenberg, Detlef, 87600 Kaufbeuren (DE); Pöllath, Rainer, 87494 Rückholz (DE); Heim, Angelika, D-87637 Eisenberg (DE)
(74) Vertreter: Andres, Angelika Maria

(57) **Zusammenfassung**

Drehflügelgrenzschalter (D) zur Bestimmung eines Grenzstands eines Füllguts, mit einem Gehäuse (9, 10), welches Gehäuse (9,10) zur Aufnahme eines Motors (6) und einer Antriebswelle (8) dient, wobei die Antriebswelle (8) zur Drehung eines an der Antriebswelle (8) befestigten Drehflügels (P) dient, wobei der Drehflügelgrenzschalter (D) ein Sichtfenster (7) zur optischen Kontrolle der Drehbewegung des Drehflügels (P) und/oder der Antriebswelle (8) aufweist.

## Beschreibung

Die Erfindung bezieht sich auf einen Drehflügelgrenzschalter zur Bestimmung eines Grenzstands eines Füllguts, mit einem Gehäuse, welches Gehäuse zur Aufnahme eines Motors und einer Antriebswelle dient, wobei die Antriebswelle zur Drehung eines an der Antriebswelle befestigten Drehflügels dient,

In der Industrie werden Flüssigkeiten und Schüttgüter, die zur Herstellung bestimmter Produkte benötigt werden, meist in Behältern wie Silos gelagert. Um den Bestand zu überwachen werden meist so genannte Grenzstandschalter eingesetzt, die bei Erreichen des zu überwachenden Füllstands ein Signal erzeugen. Beispielsweise werden solche Grenzstandschalter zur Erzeugung eines Alarmsignals im Falle des Erreichens eines maximalen Füllstands verwendet, so dass der Behälter beim Befüllen nicht überläuft.

Zur Überwachung eines vorgegebenen Füllstands eines Schüttguts in einem Behälter sind verschiedenartige Messgeräte bekannt. Die vorliegende Erfindung betrifft einen Drehflügelgrenzschalter. Dieser beruht auf folgendem Prinzip: ein Motor treibt über eine Welle einen daran befestigten Messflügel zur Rotation an, wobei der Messflügel sich in dem Behälter befindet. Trifft das Medium auf den Messflügel, so stellt es einen Widerstand für die Rotationsbewegung dar, wodurch der Messflügel abgebremst oder sogar vollständig angehalten wird. Hierdurch wird der Motor von einer Ruhelage in eine Schaltlage versetzt, d.h. die Stromversorgung des Motors wird unterbrochen und die Drehbewegung des Messflügels setzt aus. Sobald das Füllgut den Messflügel wieder frei gibt beginnt sich der Messflügel erneut zu drehen. Des Weiteren wird bei Bedeckung des Messflügels ein Schaltkontakt geschlossen, welcher dem Benutzer das Erreichen des Füllstands signalisiert. Ein derartiges Messgerät wird von der Anmelderin unter dem Namen Soliswitch angeboten und vertrieben.

Eine optische und damit unmittelbare Zustands- und/oder Funktionsüberprüfung ist aufgrund der Kompakten und oftmals geschlossenen, d.h. nicht einsehbaren, Bauart der Drehflügelmessgeräte bzw. des Behälters, an dem der Drehflügelgrenzschalter angebracht ist, kaum oder nur mit großem Aufwand verbunden möglich.

Der Erfindung liegt die Aufgabe zugrunde, eine einfache Sichtkontrolle des Zustands und/oder der Funktionsfähigkeit eines Drehflügelgrenzschalters zu ermöglichen.

Die Aufgabe wird erfindungsgemäß durch einen Drehflügelgrenzschalter, eine Anordnung umfassend einen Drehflügelgrenzschalter sowie ein Verfahren zur Funktionskontrolle eines Drehflügelgrenzschalters gelöst.

Hinsichtlich des Drehflügelgrenzschalters wird die Aufgabe dadurch gelöst, dass der Drehflügelgrenzschalter ein Sichtfenster zur optischen Kontrolle der Drehbewegung des Drehflügels und/oder der Antriebswelle aufweist.

Die vorliegende Erfindung betrifft also einen Drehflügelgrenzschalter, der bspw. unter einer abschraubbaren Abdeckung über ein Sichtfenster verfügt, wobei durch das Sichtfenster die Drehbewegung einer Sichtscheibe zu erkennen ist. Das Sichtfenster kann aber auch durch das Gehäuse des Drehflügelgrenzschalters hindurch verlaufen. bspw. kann zu diesem Zweck ein Bereich des Gehäuses oder der Abdeckung transparent ausgestaltet sein. In dem Gehäuse des Drehflügelgrenzschalters ist bspw. eine Betriebselektronik, der Motor und/oder die Welle angeordnet. Dabei ist die aus Betriebselektronik, Motor und/oder Welle bestehende Antriebseinheit des Drehflügelgrenzschalters derart angeordnet, dass durch das Sichtfenster hindurch eine Sichtlinie entsprechen den Blick auf die Sichtscheibe freigibt.

In einer Ausführungsform des Drehflügelgrenzschalters weist das Gehäuse des Drehflügelgrenzschalters einen abnehmbaren Deckel auf, der aus einem transparenten Material besteht und/oder in dem sich das Sichtfenster befindet.

In einer weiteren Ausführungsform des Drehflügelgrenzschalters ist ein Sichtelement, insbesondere eine Sichtscheibe vorgesehen, welche bevorzugt kreisrund ist, die mit der Antriebswelle wirkverbunden ist und welches Sichtelement dazu dient, eine Drehbewegung der Antriebswelle und/oder des Drehflügels anzuzeigen.

In einer weiteren Ausführungsform des Drehflügelgrenzschalters ist das Sichtelement senkrecht zur Antriebswelle orientiert und ist vorzugsweise mittig mit der Antriebswelle verbunden.

Bei der Sichtscheibe kann es bspw. um eine kreisrunde Sichtscheibe handeln, die mittig die mit ihr vorzugsweise starr verbundene Antriebswelle aufnimmt und dadurch der Drehbewegung der Antriebswelle des Drehflügelgrenzschalters folgt.

In einer weiteren Ausführungsform des Drehflügelgrenzschalters weist das Sichtelement eine, vorzugsweise zum Sichtfenster weisende, funktionalisierte, insbesondere mit Markierungen versehene, Oberfläche auf, die dazu dient, die Drehbewegung der Antriebswelle und/oder des Drehflügels insbesondere durch Farbwechsel anzuzeigen.

Die mit Markierungen versehene und zum Sichtfenster weisende bzw. durch das Sichtfenster einsehbare Sichtscheibenoberfläche kann bspw. von einer Lichtquelle beleuchtet sein. Bei der Lichtquelle kann es sich um eine mit Universalspannung, d.h. 240 VAC, versorgte weiße LED-Einheit mit einer Versorgungsspannunganpassung handeln.

Die Markierungen auf der Sichtscheibe können bspw. aus einem seitlich versetzten, abgestuften schwarz-weißen zebrastreifenartigen Muster bestehen. Diese Markierungen können auf die Drehzahl der Antriebswelle, bei der es sich bspw. um die Nenndrehzahl der Antriebswelle handelt, die bspw. bei 1 Upm (Umdrehung pro Minute) liegt, abgestimmt sein. Vorzugsweise sind die Markierungen so abgestimmt, dass bei dieser Nenndrehzahl, die konstant durch einen getriebeuntersetzten Synchronmotor vorgegeben wird, sich dem Betrachter ein gleichmäßiges takthaltiges zonenabwechselndes Erscheinungsbild darbietet. Dadurch kann eine Blockade der Antriebswelle oder des Drehflügels wie sie bspw. bei der Inbetriebnahme des Drehflügelgrenzschalters auftreten kann, ein Netzspannungsausfall, eine Störung in der Frequenz der Netzspannungsversorgung oder der bestimmungsgemäße Antriebsstillstand bei Füllstandserreichung erkannt werden, ohne dass der Drehflügelgrenzschalter ausgebaut oder außer Betreib genommen werden muss.

Das Sichtfenster kann sich auch unterhalb einer abschraubbaren Abdeckung befinden, wobei die Abdeckung abgenommen werden kann, ohne die Funktion des Drehflügelgrenzschalters zu unterbrechen.

In einer weiteren Ausführungsform des Drehflügelgrenzschalters ist eine Lichtquelle, die vorzugsweise zusammen mit dem Sichtelement innerhalb des Gehäuses des Drehflügelgrenzschalters angeordnet ist, vorgesehen, die dazu dient, das Sichtelement zu beleuchten.

In einer weiteren Ausführungsform des Drehflügelgrenzschalters sind das Sichtelement und die Drehzahl der Antriebswelle und/oder des Drehflügels aufeinander abgestimmt, um eine Sichtkontrolle der Drehbewegung durch das Sichtfenster zu ermöglichen/auszuführen.

In einer weiteren Ausführungsform des Drehflügelgrenzschalters dient die Sichtkontrolle durch das Sichtfenster dazu, eine Blockierung bzw. einen Stillstand der Antriebswelle und/oder des Drehflügels zu erkennen.

In einer weiteren Ausführungsform des Drehflügelgrenzschalters dient die Sichtkontrolle durch das Sichtfenster dazu, einen Fehlerfall, bspw. einen Ausfall der Energieversorgung, des Drehflügelgrenzschalters zu erkennen, und vorzugsweise durch Blinken der Lichtquelle anzuzeigen.

In einer weiteren Ausführungsform des Drehflügelgrenzschalters dient die Sichtkontrolle durch das Sichtfenster dazu, eine Störung, insbesondere in der Frequenz, der Drehbewegung der Antriebswelle und/oder des Drehflügels zu erkennen.

In einer weiteren Ausführungsform des Drehflügelgrenzschalters ist der Drehflügel im Bereich eines Endes der Antriebswelle angeordnet und das Sichtelement im Bereich des gegenüberliegenden Endes der Antriebswelle angeordnet.

In einer weiteren Ausführungsform des Drehflügelgrenzschalters sind das Sichtfenster und das Sichtelement derart angeordnet, dass eine Sichtkontrolle nur in Richtung einer Achse im Wesentlichen parallel zur Längsachse der Antriebswelle durchführbar ist.

Hinsichtlich der Anordnung wird die Aufgabe dadurch gelöst, dass die Anordnung einen Drehflügelgrenzschalter nach einer der vorgenannten Ausführungsformen umfasst, welcher Drehflügelgrenzschalter an einem Behälter, der zur Aufnahme des Füllguts dient, angebracht ist.

Hinsichtlich des Verfahrens wird die Aufgabe dadurch gelöst, dass anhand einer optischen Sichtkontrolle, vorzugsweise der Drehbewegung des Sichtelements, durch das Sichtfenster ein Zustand des Drehflügelgrenzschalters bestimmt wird.

Die Erfindung wird anhand der nachfolgenden Zeichnungen näher erläutert. Es zeigt:
Fig. 1: eine schematische Darstellung eines Längsschnitts durch einen Drehflügelgrenzschalter,
Fig. 2: eine schematische Darstellung einer Aufsicht auf einen Drehflügelgrenzschalter mit einem transparenten Deckel, und
Fig. 3: eine schematische Darstellung einer Aufsicht auf einen Drehflügelgrenzschalter mit einem transparenten Deckel und einer dahinter liegenden Abdeckung mit einem Sichtfenster.

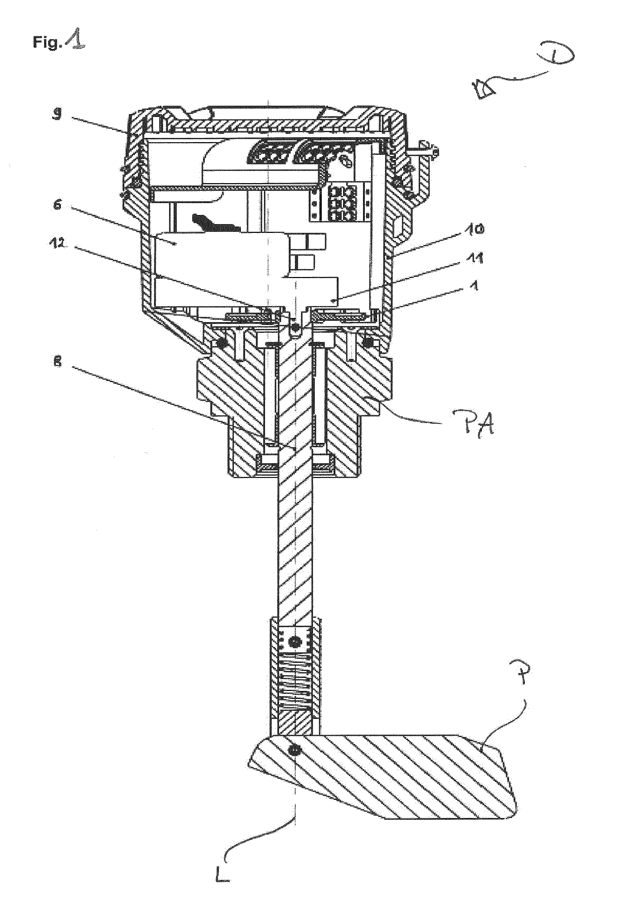

Figur 1 zeigt einen Längsschnitt durch einen Drehflügelgrenzschalter D. Der Drehflügelgrenzschalter D besteht aus einem Gehäuse mit einem Gehäusebasisteil 10 und einem Gehäusedeckel 9. In dem Gehäuse ist ein Synchronmotor 6 angeordnet, der eine Antriebswelle 8 über ein Getriebe 11 mit einer Getriebeachse 12 antreibt, d.h. in Drehung versetzt. (Synchron- )Motor und Getriebe bilden dabei eine Antriebseinheit. An dem außerhalb des Gehäuses liegenden Ende der Antriebwelle 8 kann ein entsprechender Drehflügel P angebracht werden, der durch die Antriebswelle 8 in eine Drehbewegung gebracht werden kann.

Ferner ist mit dem Gehäuse ein Prozessanschluss PA verbunden, der zur Befestigung des Drehflügelgrenzschalters D an einem Behälter, wie bspw. einem Tank, dient. Über diesen Prozessanschluss PA ist die Antriebswelle 8 mit dem Motor 6, genauer dem Getriebe 11, verbunden.

Mit der Antriebswelle 8 ist auch eine Sichtscheibe 2 innerhalb des Gehäuses verbunden. Der Synchronmotor 6 und/oder andere Bauteile, die die Antriebseinheit des Drehflügelgrenzschalters bilden, sind dabei so angeordnet, dass eine Sichtlinie auf die Sichtscheibe 2 durch ein Sichtfenster 7 freigegeben wird. Das Sichtfenster 7 kann dabei durch eine Aussparung in dem Gehäusedeckel 9, bspw. in Form eines transparenten Fensters, oder durch einen selbst vollständig transparenten Gehäusedeckel 9 gebildet werden. Die dadurch in Figur 1 gebildete Sichtlinie liegt dabei im Wesentlichen parallel zur Längsachse der Antriebswelle 8.

Die Getriebeachse 12 wird dabei gem. der in Figur 1 gezeigten Ausführungsform von einem Sackloch in der Antriebswelle 8 aufgenommen, so dass die Drehbewegung auf die Antriebswelle 8 übertragen wird und kann bspw. mit einer Schraube wirkverbunden sein. Die Antriebswelle 8 wird dann anschließend aus dem Gehäuse hinaus geführt. Die Sichtscheibe 2 ist innerhalb des Gehäuses mit der Antriebswelle 8 verbunden. Insbesondere ist die Sichtscheibe 2 in einem Bereich der Antriebswelle 8 angeordnet und/oder mit der Antriebswelle 8 befestigt, in dem sich die Getriebeachse 12 und die Antriebswelle 8 überlappen und steht besonders bevorzugt senkrecht sowohl zur Antriebswelle 8 als auch zur Getriebeachse 12.

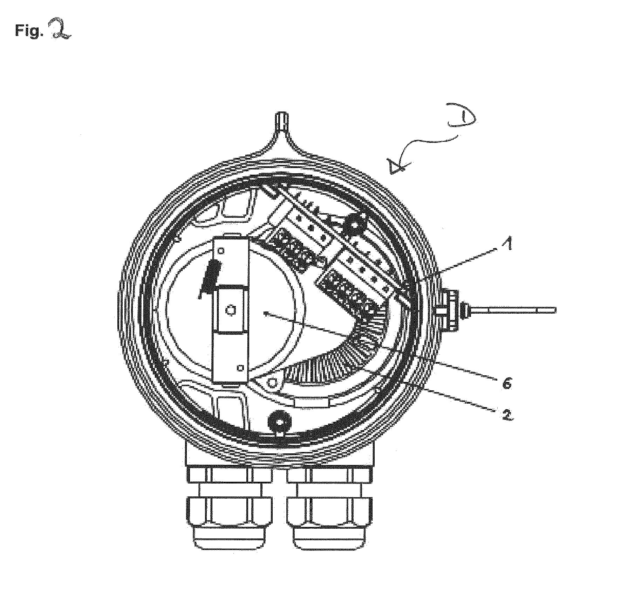

Figur 2 zeigt eine Aufsicht auf einen Drehflügelgrenzschalter D mit einem transparenten Gehäusedeckel 9. Alternativ zu der in Figur 2 gezeigten Ausgestaltung kann durch das Sichtfenster auch erst nach Abnehmen des Gehäusedeckels 9 eine Sichtlinie auf die Sichtscheibe 2 freigegeben werden oder ein größerer Sichtbereich auf die Sichtscheibe 2 freigegeben werden. In dem in Figur 2 gezeigten Ausführungsbeispiel weist die Sichtscheibe 2 Segmente unterschiedlicher Färbung. Gemäß Figur 2 handelt es sich dabei um schwarze und weiße sich abwechselnde Streifen. Zudem sind die Streifen seitlich zueinander versetzt.

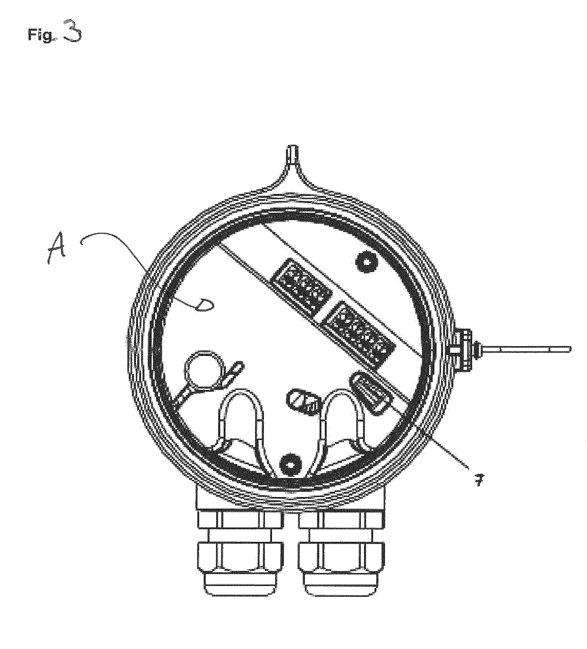

Figur 3 zeigt eine Aufsicht auf einen Drehflügelgrenzschalter D mit einem transparenten Gehäusedeckel. Zwischen dem Gehäusedeckel und dem in dem Gehäusebasisteil angeordneten Antriebseinheit des Drehflügelgrenzschalters ist eine Abdeckung A vorgesehen. In der Abdeckung A ist eine Öffnung vorgesehen, die als Sichtfenster 7 dient, und die Sicht, bspw. in Form einer Sichtlinie, auf die vorgeschlagene Sichtscheibe 2 freigibt. Durch den Gehäusedeckel und das Sichtfenster 7 hindurch ist damit die Sichtscheibe 2 für eine optische Überprüfung der Drehbewegung der Antriebswelle und/oder des Drehflügels möglich. Die Abdeckung in Figur 3 kann ferner weitere Öffnungen aufweisen, die zur Aufnahme bspw. von Anschlussklemmen etc. dienen.

Alternativ kann der Gehäusedeckel 9 aus einem nicht-transparenten Material, nicht gezeigt, bestehen und im Gehäusedeckel ein transparentes Sichtfenster 7 vorgesehen sein. Durch das Sichtfenster eines solchen Gehäusedeckels ist ebenfalls eine Funktionskontrolle der Drehbewegung der Antriebswelle 8 über die Sichtscheibe 2 möglich. Die Sichtlinie auf die Sichtscheibe 2 verläuft dabei durch das Sichtfenster 7 und/oder durch eine entsprechende Ausnehmung einer Platine, auf der eine Betriebselektronik angeordnet ist, und/oder seitlich an dem Synchronmotor 6 vorbei.

In den gezeigten Ausführungsformen ist die Antriebseinheit des Drehflügelgrenzschalters zwischen der Sichtscheibe und dem Gehäusedeckel und ggfs. einer Abdeckung angeordnet. Es sind aber auch andere Anordnungen möglich.

### Bezugszeichenliste

- 1: Leuchtdiode
- 2: Sichtscheibe
- 3: Streifensegment, weiß
- 4: Streifensegment, schwarz
- 5: seitliche Segmentversetzung
- 6: Synchronmotor
- 7: Sichtfenster
- 8: Antriebswelle
- 9: Gehäusedeckel
- 10: Gehäusebasisteil
- 11: Getriebe
- 12: Getriebeachse
- D: Drehflügelgrenzschalter
- L: Längsachse
- P: Drehflügel
- PA: Prozessanschluss
- A: Abdeckung

## Patentansprüche

1. Drehflügelgrenzschalter (D) zur Bestimmung eines Grenzstand eines Füllguts,
mit einem Gehäuse (9, 10), welches Gehäuse (9,10) zur Aufnahme eines Motors (6) und einer Antriebswelle (8) dient,
wobei die Antriebswelle (8) zur Drehung eines an der Antriebswelle (8) befestigten Drehflügels (P) dient,
**dadurch gekennzeichnet,**
**dass** der Drehflügelgrenzschalter (D) ein Sichtfenster (7) zur optischen Kontrolle der Drehbewegung des Drehflügels (P) und/oder der Antriebswelle (8) aufweist.

2. Drehflügelgrenzschalter (D) nach Anspruch 1,
**dadurch gekennzeichnet,**
**dass** das Gehäuse (9,10) des Drehflügelgrenzschalters (D) einen abnehmbaren Deckel (9) aufweist, der aus einem transparenten Material besteht und/oder in dem sich das Sichtfenster (7) befindet.

3. Drehflügelgrenzschalter (D) nach Anspruch 1 oder 2,
**dadurch gekennzeichnet,**
**dass** ein Sichtelement (2), insbesondere eine Sichtscheibe vorgesehen ist, welche bevorzugt kreisrund ist, die mit der Antriebswelle (8) wirkverbunden ist und welches Sichtelement (2) dazu dient, eine Drehbewegung der Antriebswelle (8) und/oder des Drehflügels (P) anzuzeigen.

4. Drehflügelgrenzschalter (D) nach Anspruch 3,
**dadurch gekennzeichnet,**
**dass** das Sichtelement (2) senkrecht zur Antriebswelle (8) orientiert ist und dass das Sichtelement (2) vorzugsweise mittig mit der Antriebwelle (8) verbunden ist.

5. Drehflügelgrenzschalter (D) nach Anspruch 3 oder 4,
**dadurch gekennzeichnet,**
**dass** das Sichtelement (2) eine, vorzugsweise zum Sichtfenster (7) weisende, funktionalisierte, insbesondere mit Markierungen versehene, Oberfläche aufweist,
die dazu dient, die Drehbewegung der Antriebswelle (8) und/oder des Drehflügels (P) insbesondere durch Farbwechsel anzuzeigen.

6. Drehflügelgrenzschalter (D) nach einem der Ansprüche 3 bis 5,
**dadurch gekennzeichnet,**
**dass** eine Lichtquelle (1), die vorzugsweise zusammen mit dem Sichtelement (2) innerhalb des Gehäuses (9, 10) des Drehflügelgrenzschalters (D) angeordnet ist, vorgesehen ist, die dazu dient, das Sichtelement (2) zu beleuchten.

7. Drehflügelgrenzschalter (D) nach einem der Ansprüche 3 bis 6,
**dadurch gekennzeichnet,**
**dass** das Sichtelement (2) und die Drehzahl der Antriebswelle (8) und/oder des Drehflügels (P) aufeinander abgestimmt sind, um eine Sichtkontrolle der Drehbewegung durch das Sichtfenster (7) zu ermöglichen/auszuführen.

8. Drehflügelgrenzschalter (D) nach einem der vorherigen Ansprüche,
**dadurch gekennzeichnet,**
**dass** die Sichtkontrolle durch das Sichtfenster (7) dazu dient,
eine Blockierung bzw. einen Stillstand der Antriebswelle (8) und/oder des Drehflügels (P) zu erkennen.

9. Drehflügelgrenzschalter (D) nach einem der vorherigen Ansprüche,
**dadurch gekennzeichnet,**
**dass** die Sichtkontrolle durch das Sichtfenster (7) dazu dient, einen Fehlerfall, bspw. einen Ausfall der Energieversorgung, des Drehflügelgrenzschalters (D) zu erkennen.

10. Drehflügelgrenzschalter (D) nach einem der vorherigen Ansprüche,
**dadurch gekennzeichnet,**
**dass** die Sichtkontrolle durch das Sichtfenster (7) dazu dient, eine Störung, insbesondere in der Frequenz, der Drehbewegung der Antriebswelle (8) und/oder des Drehflügels (P) zu erkennen.

11. Drehflügelgrenzschalter (D) nach einem der vorherigen Ansprüche,
**dadurch gekennzeichnet,**
**dass** der Drehflügel (P) im Bereich eines Endes der Antriebswelle (8) angeordnet ist und
**dass** das Sichtelement (2) im Bereich des gegenüberliegenden Endes der Antriebswelle (8) in dem Gehäuse (9, 10) angeordnet ist.

12. Drehflügelgrenzschalter (D) nach einem der Ansprüche 3 bis 11,
**dadurch gekennzeichnet,**
**dass** das Sichtfenster (7) und das Sichtelement (2) derart angeordnet sind, dass eine Sichtkontrolle nur in Richtung einer Achse im Wesentlichen parallel zur Längsachse (L) der Antriebswelle (8) durchführbar ist.

13. Anordnung umfassend einen Drehflügelgrenzschalter (D) nach einem der vorherigen Ansprüche der an einem Behälter, der zur Aufnahme des Füllguts dient, angebracht ist.

14. Verfahren zur Funktionskontrolle eines Drehflügelgrenzschalters (D) nach einem der Ansprüche 1 bis12,
wobei anhand einer optischen Sichtkontrolle, vorzugsweise der Drehbewegung des Sichtelements (2), durch das Sichtfenster (7) ein Zustand des Drehflügelgrenzschalters (D) bestimmt wird.
